# EUROPEAN PATENT APPLICATION

(11) **EP 1 595 684 A1**
(43) Date of publication of application: **16.11.2005**
(21) Application number: 05103673.9
(22) Date of filing: 03.05.2005
(51) Int. Cl.: B29C 53/08, B29C 47/88

(54) **Process for the continuous production of a component comprising a bent tubular body**

(30) Priority: 14.05.2004 FR 0450947
(71) Applicant: ITT MANUFACTURING ENTERPRISES, INC., Wilmington, Delaware 19801 (US)
(72) Inventor: Claus, Patrick, 57690 Haute Vigneulles (FR); Champlon, Lionel, 57000 Metz (FR)
(74) Representative: Kohn, Philippe

(57) **Abstract**

The invention proposes a process for producing a component (10) comprising a tubular body (12) made of a thermoplastic, consisting of at least one elbow section (20), which process comprises:
a) a step of producing a tubular extrudate (38) by extrusion or by injection;
b) a step of forming the said elbow section (20) by the hot bending of an intermediate section of the extrudate (38) between two straight sections,
wherein the bending step is carried out continuously on the hot extrudate (38) formed during the production step, and wherein the end-fiting is fitted onto the downstream free end of the extrudate before the bending step.

The invention also proposes an installation for implementing the process, which comprises a device (24) for producing the extrudate (38) by extrusion or injection, and a bending head (42) placed immediately downstream of the production device (24).

## Description

The invention proposes a process for the continuous production of a component comprising a bent tubular body and end-fittings at each of its ends.

More particularly, the invention proposes a process for producing a component comprising a tubular body made of a thermoplastic, consisting of at least two generally straight sections joined together by an elbow section, of the type comprising:
a) a step of producing a tubular extrudate by extrusion or by injection;
b) a step of forming the said elbow section by the hot bending of an intermediate section of the extrudate between two straight sections.

In current manufacturing processes, such a component, or pipe, is produced by bending a straight tube that has been produced beforehand by extrusion, cut to the necessary length and then temporarily stored.

Next, the straight tube is removed from the storage area and then bent so as to have the required shape.

Finally, the end-fittings are fitted onto the ends of the bent tube.

By temporarily storing the straight tube it is possible for the line for bending the straight tube to be placed independently of the line for extruding the straight tube, and therefore the two lines may be located at two different locations.

However, this requires the provision of facilities for temporarily storing the straight tubes, and also means for transferring the tubes from the extrusion line to the place for temporary storage, as well as means for transferring the tubes from the temporary storage place to the bending line.

In addition, in order to bend the tubes, which are made of a thermoplastic material, it is necessary to raise the temperature of the zone of the tube which is to be bent, or of the entire tube, up to a temperature called the "bending temperature", which lies between the melting point of the material and the glass transition temperature of the material.

When the material is heated up to this bending temperature, the material is "softened", which simplifies the bending operation.

After the straight tubes have been produced by extrusion, they are cooled down to a temperature below the glass transition temperature, in order to allow them to be temporarily stored and handled. In addition, the straight tubes cool down naturally by contact with the ambient air.

Consequently, before the bending operation, it is necessary to reheat the straight tube to the bending temperature.

Depending on the material used, the operation of reheating the straight tube up to the bending temperature also modifies the crystalline structure of the material by what is called an "annealing" effect, which modifies the mechanical properties of the material and also reduces the length of the tube.

Furthermore, this operation of reheating the straight tube consumes a large amount of energy, due to the amount of heat to be supplied to the tube.

After the cylindrical tube has been bent, coupling end-fittings are fitted onto each end of the bent body.

Thus, the production of a single component requires a large number of handling operations due to the fact that the straight tube is temporarily stored after it has been produced by extrusion.

These additional handling operations increase the time needed to produce the component and therefore the cost of this component.

The object of the invention is to propose a process for the production of such a component, which comprises a tubular body made of a thermoplastic, consisting of at least two generally straight sections joined together by an elbow section, and including at least one end-fitting that is fitted at a first free end of the tubular body, which comprises a reduced number of steps, allowing the manufacturing time for a component to be reduced.

For this purpose, the invention proposes a process of the type described above, characterized in that the end-fitting is fitted onto the downstream free end of the extrudate before the bending step.

According to other features of the process according to the invention:
- before the bending step, the process includes a step consisting in lowering the temperature of the extrudate down to a bending temperature;
- the process includes a step of sectioning the tubular body, this being carried out after the bending step;
- an end-fitting is fitted onto the upstream free end of the body after the sectioning step;
- the process includes a step consisting in introducing a flexible core coaxially with the extrudate into the extrudate during its production and before the said step of bending the extrudate;
- the process includes a step of extracting the flexible core from the extrudate immediately before the sectioning step;
- the process includes a step of forcibly cooling the tubular body after its production by bending and before the sectioning step;
- the cooling step consists in making a heat-transfer fluid circulate within the flexible core; and
- the bending step consists in carrying out, in succession, several bending operations on the hot extrudate in different orientations.

For this purpose, the invention proposes an installation for producing components comprising a tubular body, by applying the production process according to the invention, of the type which includes a device for producing the tubular extrudate by extrusion or by injection, and a bending head for bending the tubular extrudate, characterized in that the bending head is placed immediately downstream of the production device.

According to other features of the installation according to the invention:
- the installation includes a device for regulating the temperature of the extrudate to a temperature called the bending temperature, which device is placed between the production device and the bending head;
- the installation includes a device for sectioning the extrudate, placed downstream of the temperature regulation device or downstream of the bending head;
- the installation includes a device for introducing a flexible core coaxially into the extrudate, so that these two elements leave the head of the production device continuously;
- the device for introducing the flexible core comprises a feed device for feeding the core into the head of the production device;
- the feed device comprises a mechanism for driving the flexible core so that the speed of advance of the flexible core and the speed of the extrudate output by the production device are substantially equal;
- the drive mechanism is capable of retracting the flexible core, in order to extract it from the bent extrudate, immediately before the sectioning step;
- the flexible core is tubular and a heat-transfer fluid can be made to pass through it; and
- the flexible core is made of polytetrafluoroethylene or a silicone.

The object of the invention is also to propose an installation for producing a component by applying the process according to the invention.

Other features and advantages of the invention will become apparent on reading the following detailed description, for the understanding of which the reader may refer to the appended figures in which:
- Figures 1a and 1b are schematic representations of two parts of an installation according to the invention for producing an element comprising a bent tubular body;
- Figures 2a to 2c are detailed views on a larger scale of the installation shown in Figure 1a, representing the operation of the installation at various steps of the process; and
- Figure 3 is a schematic perspective representation of an element produced by the installation shown in Figures 1a and 1b, by applying the process according to the invention.

In the following description, identical, similar or equivalent elements will be denoted by the same reference numbers.

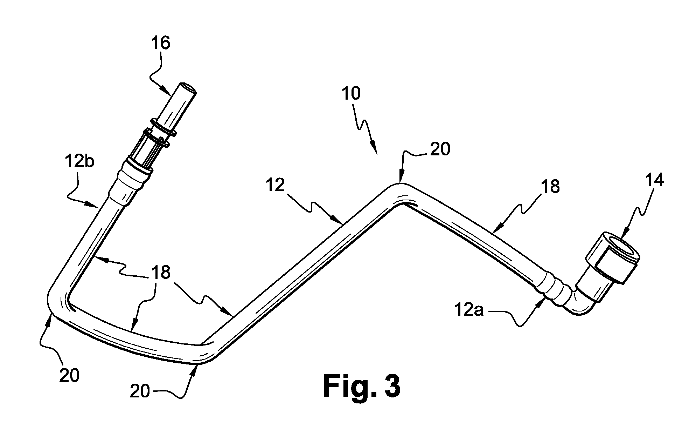

Figure 3 shows a pipe 10 intended for example to be mounted on the engine of a motor vehicle.

This pipe 10 comprises a body 12 and end-fittings 14, 16.

The body 12 is a bent tubular element, made of a thermoplastic; it thus comprises straight sections 18 joined together by elbow sections 20. The elbow sections 20 are produced here so that the body 12 is an element that does not lie in one plane.

The end fittings 14, 16 are fitted onto the respective free ends 12a, 12b of the tubular body 12.

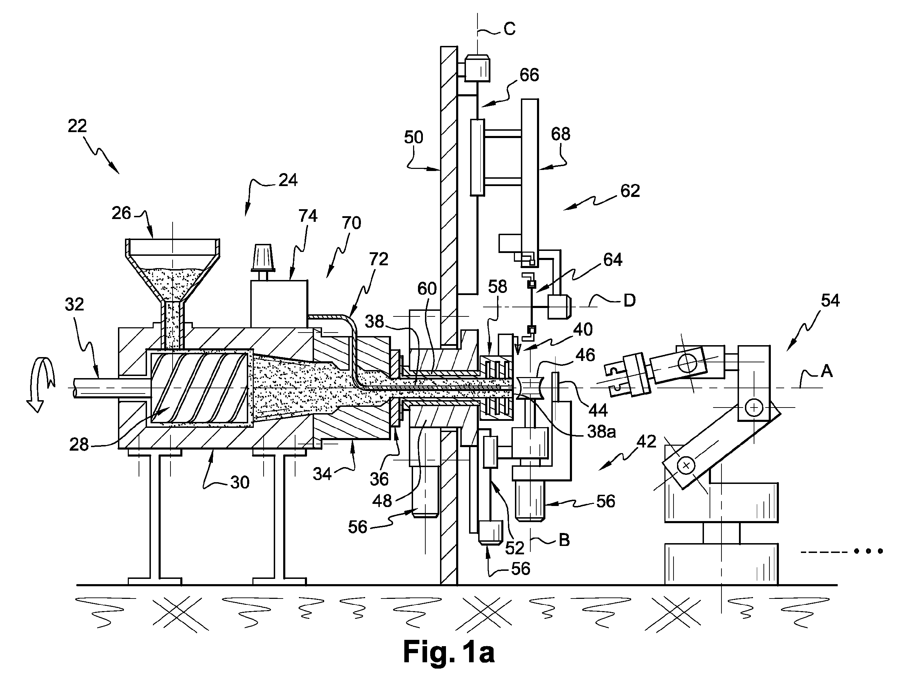

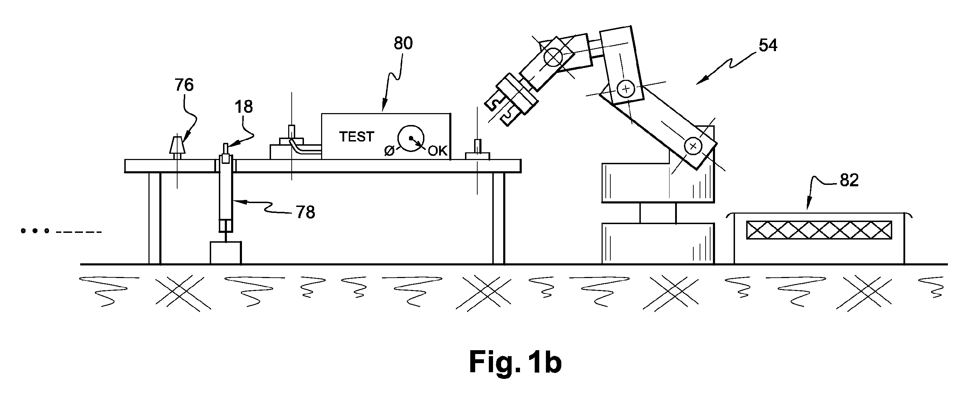

Figures 1a and 1b show an installation 22 for producing the pipe 10.

As may be seen in Figure 1a, the installation 22 comprises a device for producing an extrudate 38, which device consists here of an extruder 24 of known type, which includes a thermoplastic feed device 26, a screw 28, which rotates inside a barrel 30, means 32 for rotating the screw 28, an extrusion head 34 and a die 36, which gives the stream of plasticized material its shape.

Since the body 12 of the pipe 10 is tubular, the die 36 includes a mandrel (not shown) allowing the body to have a hollow profile.

On leaving the die 36, the stream of plasticized material forms a continuous tubular element 38, hereafter called the extrudate, which is intended to form the body 12 of the pipe 10.

The extruder 24 here is an extruder of the single-screw type, that is to say it has only a single screw 28, the pitch of which may or may not vary. However, it will be understood that the extruder may also comprise several parallel screws, in which case the extruder 24 is of the multi-screw type.

In the following description of the installation 22, the main axis A of the extruder 24, which is the main axis of the screw 28, will be considered to be parallel to the longitudinal main direction L. However, it will be understood that the invention also applies to an installation 22 for which the orientation of the main axis A of the extruder 24 is different, especially an orientation parallel to the vertical direction V.

The installation also includes a bending head 42 for producing the elbow sections 20 of the body 12.

According to the preferred embodiment, the bending head 42 is of the numerical-control and multi-axis type, thus allowing the elbow sections 20 of the extrudate 38 to be bent in several orientations, thus making it possible to have a tubular body 12 that extends in three dimensions.

The bending head 42 is of known design - it comprises here a bending finger 44 and a bending pulley 46, these being mounted so as to pivot about an axis B perpendicular to the longitudinal axis A of the extruder 24 and cooperating together to form the elbow sections 20 of the tubular body 12.

The tubular body 12 comprises several elbow sections 20 which, depending on the specifications of the pipe 10, may have different radii of curvature.

Now, the pulley 46 of the bending head 42 makes it possible for a single radius of curvature of the elbow section 20 to be obtained.

Thus, according to an alternative embodiment of the invention, the bending head 42 comprises several pulleys 46 of different dimensions, each of which is associated with a radius of curvature of the elbow sections 20.

These pulleys 46 are furthermore mounted so as to slide along the axis B, in order to bring the pulley 46 associated with the elbow section to be obtained in line with the extrudate 38, and their movement along the axis B is numerically controlled.

The bending pulley 46 is then said to be a staged or "multi-radius" pulley.

The finger 44 and the pulley 46 are mounted on a body 48, which is mounted so as to pivot with respect to a fixed frame 50 about the longitudinal axis A, thereby making it possible to modify the orientation of the axis B. This thus allows the extrudate 38 to be bent in order to form elbow sections 20 having different orientations.

The body 48 is placed here between the extruder 24 and the assembly formed by the finger 44 and the pulley 46, that is to say a tubular element which extends coaxially to the extruder 24 and through which the extrudate 38 passes.

The bending head 42 also includes a device 52 for moving the finger 34 and the pulley 46 translationally with respect to the body 48, parallel to the axis B, in order to disengage them when the entire tubular body 12 has been bent, thus allowing the tubular body 12 to be subsequently handled, for example by means of a handling arm 54.

The finger 34, the pulley 46 and the body 48 are driven in their respective movements by means of various motors 56 which are electronically controlled individually.

According to the invention, the bending head 42 is placed directly downstream of the extruder 24, thereby preventing the temperature of the extrudate 38 from dropping too rapidly below the glass transition temperature, and thus allowing the extrudate 38 to be bent directly after it has been produced.

The temperature of the extrudate 38 after it has left the extruder 24 is close to the melting point of the material, which is above the glass transition temperature of the material. At such a temperature, the consistency of the extrudate 38 does not allow it to be bent. It is therefore necessary to lower the temperature of the extrudate 38 down to a temperature T_{b} called the bending temperature, allowing it to be bent under optimum conditions.

To do this, the installation 22 includes a device 58 for regulating the temperature of the extrudate 38, which device is placed between the die 36 of the extruder 24 and the bending head 42 and which is designed so that the temperature of the extrudate 38, on leaving the regulating device, is substantially equal to the bending temperature T_{b}.

By way of example, the tubular body 12 here is made of a nylon-12, known by the name RILSAN, the melting point of the material of which is 172°C, and the bending temperature T_{b} is about 160°C.

Here, the installation 22 also includes a duct 60 which connects the exit of the die 36 to the inlet of the regulation device 58. This duct 60 allows the extrudate 38 to be guided through the body 48, protecting the extrudate 38 from coming into contact with the body 48, and it also partly contributes to regulating the temperature of the extrudate 38.

The regulation device 58 opens directly onto the finger 44 and the pulley 46 of the bending head 42, so that when the extrudate 38 leaves the regulation device 58, it is at the bending temperature T_{b}, to be immediately bent in order to form elbow sections 20 of the tubular body 12.

The installation 22 also includes a device 40 for sectioning the extrudate 38, which allows that portion of the extrudate 38 which has been bent to be separated from the rest of the extrudate 38, thus forming the tubular body 12.

The device 40 for sectioning the extrudate 38 is placed so as to section the extrudate 38 at the exit of the regulation device 58. Here, it is fixed to the regulation device 58.

As mentioned above, the pipe 10 includes an end-fitting 14, 16 at each of the ends 12a, 12b of the tubular body 12.

According to another aspect of the invention, the installation 22 includes a mounting device 62 for fitting a first end-fitting 14 into the downstream free end 38a of the extrudate 38.

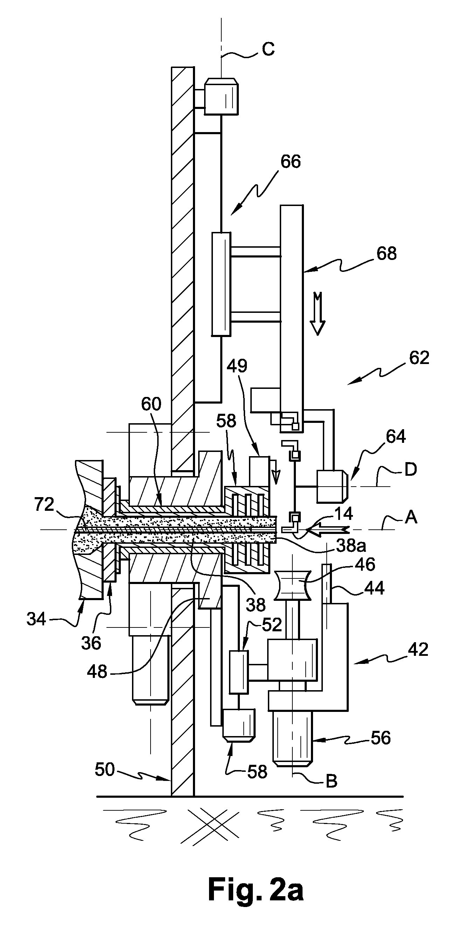

As may be seen in greater detail in Figure 2A, this mounting device 62 is capable of fitting the end-fitting 14 when the free end 38a of the extrudate 38 projects from the regulation device 58.

The mounting device 62 comprises a manipulator arm 64, which can slide longitudinally so that the end-fitting 14 moves coaxially to the extrudate 38 during the operation of fitting it into the free end 38a of the extrudate 38.

The manipulator arm 64 is furthermore mounted so as to move on a drive device 66 translationally with respect to the fixed frame 50 along an axis C orthogonal to the longitudinal axis A of the extruder 24, which here is vertical.

The mounting device 62 also includes a magazine 68 in which several end-fittings 14 are stored, and the manipulator arm 64 moves with respect to this magazine 68 so as to take an end-fitting 14 from the magazine 68 and then fit it into the free end 38a of the extrudate 38.

Here, for taking the end-fitting 14 from the magazine 68 and then for fitting it into the free end 38a of the extrudate 38, the manipulator arm 64 can move so as to pivot about a longitudinal axis D, and the manipulator arm 64 is also mounted so as to move translationally along this same longitudinal axis D in order to fit the end-fitting 14 into the free end 38a of the extrudate 38.

Depending on the cross-sectional dimension of the tubular body 12 and on the radius of curvature of the elbow sections 20 to be produced, it is necessary to introduce a flexible core inside the elbow section 20, which is in the process of being bent, in order to prevent this elbow section 20 from forming a pleat, instead of a bend.

According to yet another aspect of the invention, the installation 22 includes a device 70 for introducing a flexible core 72 coaxially into the extrudate 38, during production of the extrudate 38.

This device 70 for introducing the flexible core 72 is shaped so that the extrudate 38 and the flexible core 72 leave the head 34 of the extruder 24 continuously.

The introduction device 70 comprises, for this purpose, a device 74 for feeding the flexible core 72 into the head 34 of the extruder 24 so that the flexible core 72 is coaxial with the mandrel of the die 36.

The feed device 74 comprises a drive mechanism (not shown) for driving the flexible core 72 so that the speed of advance of the flexible core 72 and the speed of the extrudate 38 leaving the die 36 are substantially equal.

The mechanism for driving the flexible core 72 is also capable of retracting the flexible core 72 with respect to the extrudate 38, when all of the elbow sections 20 of the tubular body 12 have been formed.

Thus, when the bent part of the extrudate 38, which forms the tubular body 12, is being sectioned, the flexible core 72 is no longer inside the section of the extrudate 38 that will be sectioned.

This avoids having to section the flexible core 72, and consequently it allows it to be used again.

Here, as shown in Figure 1a, the feed device 74 is mounted on the outer wall of the barrel 30 so that the flexible core 72 is introduced radially into the head 34 of the extruder 24.

However, it will be understood that the invention is not limited to this embodiment and that the feed device 74 may be mounted on the extruder 24 so as to introduce the flexible core 72 in another direction.

Thus, according to an alternative embodiment of the invention, the flexible core 72 is generally introduced coaxially with the extruder 24, for example through the screw 28.

According to a preferred embodiment, the flexible core is made of a material having a low coefficient of friction with the material used to form the tubular body 12, for example made of a silicone or of polytetrafluoroethylene.

The use of such a material makes it easier for the flexible core 72 to be retracted, while hardly damaging the internal surface of the extrudate 38. In addition, the material used does not deform when it is heated to the melting point of the material forming the tubular body 12.

According to an alternative embodiment of the invention, the flexible core 72 is also a tubular element through which a heat-transfer fluid can circulate.

This heat-transfer fluid, which is for example air or nitrogen, is chilled and then injected into the flexible core 72 so as to rapidly cool that section of the extrudate 38 that has will be sectioned, thus allowing the tubular body 12 to undergo its final solidification.

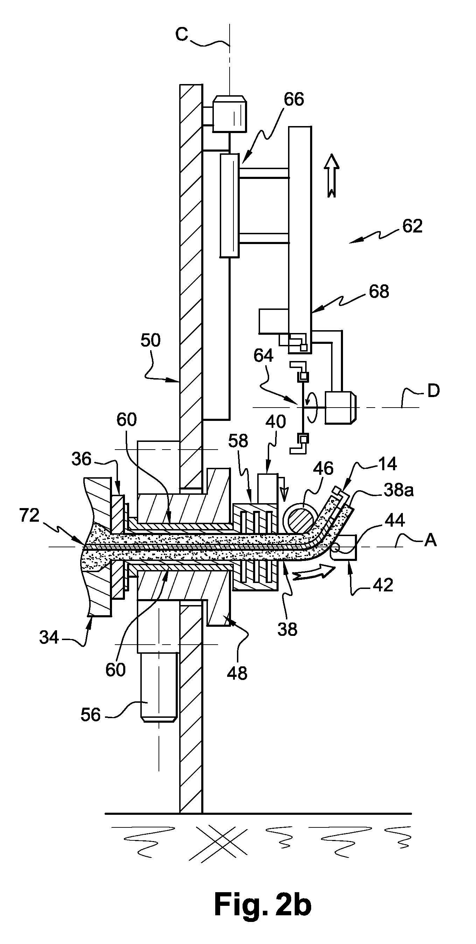

As may be seen in Figure 2b, the installation 22 also includes means for introducing the second end-fitting 16 into the associated end 12b of the tubular body 12, using a known method of introduction.

These means thus comprise a splaying cone 76, which allows the end 12b of the tubular body 12 to be elastically deformed, increasing the inside diameter of this end 12b, and a magazine 78 in which several end-fittings 16 are stored.

The end-fitting 16 that will be fitted into the end 12b of the tubular body 12 is positioned in the magazine so that its end, which will be introduced into the end 12b of the tubular body 12, projects from this magazine 78. Thus, the end 12b of the tubular body 12, which has just been deformed, is directly positioned around this end of the end-fitting 16, immediately after its deformation.

Next, when the end 12b of the tubular body 12 elastically resumes its initial shape, said end retracts around the end of the end-fitting 16, the end-fitting 16 thus being fitted into the end 12b of the tubular body 12.

Finally, the installation 22 includes a test set-up 80 for testing the finished pipe 10, especially for checking its impermeability and its pressure resistance.

Figures 2a to 2c show the various steps of the process for producing the pipe 10, which process is carried out by the installation 22 according to the invention.

As may be seen in Figure 2a, a first step of the process consists in fitting the first end-fitting 14 into the downstream free end 38a of the extrudate.

Here, the first end-fitting 14 is carried by the manipulator arm 64, which is capable of moving longitudinally with respect to the extrudate 38.

During this step, only the downstream end 38a of the extrudate 38 projects from the regulation device 58, and the bending head 42 is moved away, here vertically under the arm 64, in order to allow the manipulator arm 64 to pass.

After the first end-fitting 14 has been fitted into the downstream end 38a of the extrudate 38, the arm 64 is withdrawn to a disengaged position, shown in particular in Figures 1 and 2b, in which it is capable of taking a new end-fitting 14 from the magazine 68.

Next, the bending head 42 is positioned at the outlet of the regulation device 58.

Next, as shown in Figure 2b, the process includes a step of producing the extrudate 38 by extrusion.

Next, in another step of the process, the temperature of the extrudate 38 is lowered down to the bending temperature T_{b}.

To do this, during this temperature-lowering step, the extrudate 38 passes through the duct 60 and then the regulation device 58, which are produced so that the temperature of the extrudate 38 leaving the regulation device 58 is equal or relatively close to the bending temperature T_{b}.

After this step of lowering the temperature of the extrudate 38, and in accordance with the invention, the process includes a step of bending the extrudate 38 leaving the regulation device 58 at the bending temperature T_{b}.

This bending step is carried out by means of the bending head 42, and more particularly by the mutual action of the finger 44 and of the pulley 46 of the bending head 42.

The extrudate 38 is produced by continuous extrusion. Thus, the step of lowering the temperature of the extrudate 38 while it passes through the duct 60 and through the regulation device 58 is also carried out continuously, progressively as the extrudate 38 is being produced and output by the die 36.

Consequently, the step of bending the extrudate is also carried out continuously on the extrudate 38, progressively as it is output by the temperature regulation device 58.

The step of bending the extrude 38 consists in forming, in succession, the elbow sections 20 and the straight sections 18 of the tubular body, by carrying out several consecutive bending operations on the extrudate 38 in different orientations.

To do this, the bending head 42 is capable of pivoting about the main longitudinal axis A of the installation, as described above, in order to position the finger 44 and the pulley 46 along the curvature and orientation to be obtained for each elbow section 20 to be obtained.

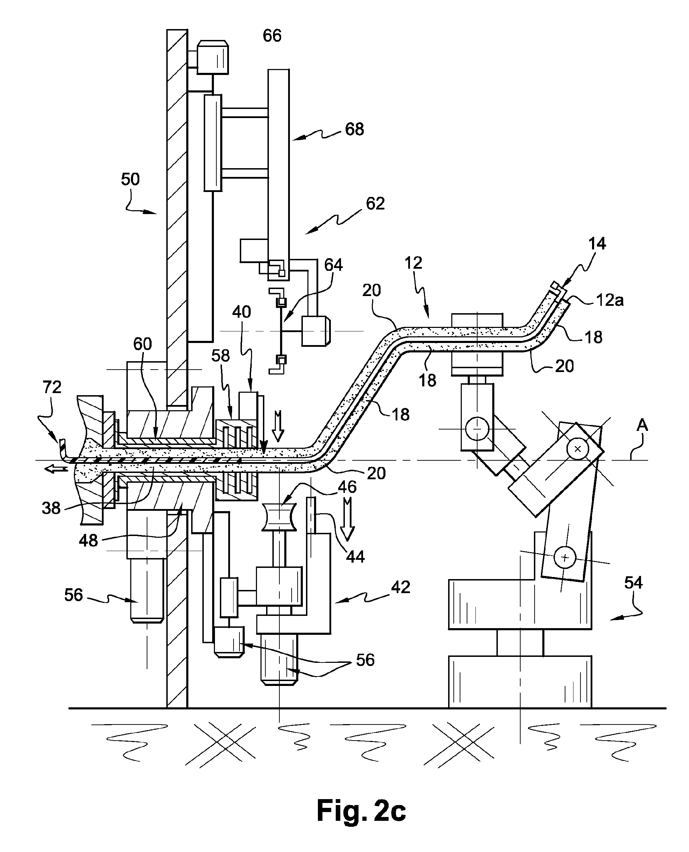

Thus, it is possible to have elbow sections 20 having different orientations and different curvatures. Here, Figure 2c shows a bent part of the extrudate 38, which lies in one plane. However, it will be understood that the curvatures and the orientations of the bent sections 20 may be different, so that the tubular body 12 is an element not lying in one plane.

After the bending step, the bent part of the extrudate 38 has the shape of the tubular body 12.

The bending head 42 is then disengaged from the outlet of the regulation device 58, here by moving vertically downwards.

The process according to the invention also includes a step consisting in introducing the flexible core 72 into the extrudate 38 during the step of producing the extrudate 38.

This step is carried out by the extruder 24 and by the feed device 74, so that the flexible core 72, on leaving the die 36, is housed inside the extrudate 38.

The flexible core 72 is thus introduced into the extrudate 38 before the bending step - this thus dispenses with the provision of additional means for introducing the flexible core 72 into the extrudate leaving the extruder 24 and before the bending step.

In addition, since the flexible core 72 is introduced into the extrudate 38 during the extrudate production step, the temperature of the flexible core 72 is then close to that of the extrudate, and this reduces the risk of excessive local cooling of the extrudate 38 down to a temperature below the bending temperature T_{b}.

Next, after the step of bending the extrudate 38, the process includes a step of forcibly cooling the bent part of the extrudate 38.

This cooling step causes the bent part of the extrudate 38 to solidify, preventing any subsequent deformation and then allowing the tubular body 12 to be sectioned and then handled.

According to the invention, this cooling step consists in making a heat-transfer fluid circulate inside the flexible core 72.

For this purpose, as mentioned above, the flexible core 72 is tubular and the heat-transfer fluid is chilled air or any other similar gas.

Next, as may be seen in Figure 2c, the cooling step is followed by a step of extracting the flexible core 72 from the extrudate 38 followed by a step of sectioning the tubular body 12.

This step of extracting the flexible core 72, which is carried out by the feed device 74, prevents the flexible core 72 from being sectioned during the sectioning step, thus making it possible for the same flexible core 72 to be reused very many times and without having to systematically scrap part of the flexible core 72.

The sectioning step allows that portion of the extrudate 38 that has been bent to be separated from the rest of the extrudate 38, in order thus to obtain the tubular body 12 of the pipe.

The tubular body 12 is then moved to the installation 76, 78 for mounting the second end-fitting 16 by the manipulator arm 54, then to the test set-up 80 for testing the finished pipe 10 and finally, depending on the result obtained by the test set-up 80, the pipe 10 is stored in a container 82, or scrapped.

After the step of sectioning the cylindrical body 12, the outlet of the regulation device 58 is cleared and it is then possible for the process according to the invention as described above to continue for the production of a new pipe 10.

The process according to the invention has been described in relation to a pipe 10 comprising a tubular body 12 comprising a single layer of a single material.

It will be understood that the invention is not limited to this embodiment and that the tubular body 12 may comprise several layers of the same material or of different materials.

The structure of the extruder 24 will therefore be modified accordingly, using known extrusion techniques.

The installation and the process according to the invention have been described with reference to the production of the extrudate 38 by extrusion. However, it will be understood that the invention is not limited to such a method of production and that the extrudate 38 may also be produced by injection.

In this case, the device 24 for producing the extrudate 38 consists of an injection device of known type, which for example includes a piston that injects the stream of plasticized material through the die 36.

A pipe 10 is produced according to the invention in a continuous manner, that is to say without temporarily storing the tubular body 12 being produced.

This allows the space needed for the installation 22 to be reduced.

In fact, since most of the operations on the tubular body 12, or the extrudate 38, are carried out near the outlet of the regulation device 58, several components of the installation 22, especially the bending head 42 and the device 40 for sectioning the extrudate 38, are placed within a small volume located at the outlet of the regulation device 58.

The production process dispenses with the temporary storage areas, and also the areas for access to these temporary storage areas, thus simplifying the stock management procedures.

As mentioned above, the step of bending the extrudate 38 takes place directly after the step of producing the extrudate 38 and the step of cooling the extrudate 38 down to the bending temperature.

Thus, the extrudate undergoes no phase of cooling down to a temperature below the bending temperature T_{b} followed by a phase of heating it back up to the bending temperature T_{b}.

The material therefore undergoes no annealing operation, which would modify its crystalline structure.

It is thus easy to distinguish a pipe 10 obtained by the process according to the invention from a pipe obtained by known processes, since the crystalline structures of the various pipes 10 are different.

In addition, when the pipe 10 obtained by the process according to the invention is subjected to an "annealing" operation, that is to say one in which it is reheated up to the bending temperature T_{b}, the crystalline structure of the tubular body is modified, which in particular has the consequence of modifying the dimensions of the tubular body.

When the pipes obtained by known processes are subjected to this same "annealing" operation, their crystalline structure is not modified, and consequently the dimensions of the tubular body remain unchanged.

Finally, the process according to the invention makes it possible to reduce the time needed to produce each pipe 10, thereby increasing the productivity and reducing the production costs.

## Claims

1. Process for producing a component (10) comprising a tubular body (12) made of a thermoplastic, consisting of at least two generally straight sections (18) joined together by an elbow section (20), and including at least one end-fitting (14) that is fitted at a first free end (12a) of the tubular body (12), of the type comprising:
a) a step of producing a tubular extrudate (38) by extrusion or by injection;
b) a step of forming the said elbow section (20) by the hot bending of an intermediate section of the extrudate (38) between two straight sections, which step is carried out continuously on the hot extrudate (38) formed during the production step,
**characterized in that** the end-fitting (14) is fitted onto the downstream free end (38a) of the extrudate (38) before the bending step.

2. Production process according to the preceding claim, **characterized in that**, before the bending step, the process includes a step consisting in lowering the temperature of the extrudate (38) down to a bending temperature.

3. Production process according to either of the preceding claims, **characterized in that** it includes a step of sectioning the tubular body (12), this being carried out after the bending step.

4. Process according to the preceding claim for producing a component that includes at least one end-fitting (16) that is fitted onto a second free end (12b) of the tubular body (12), **characterized in that** this end-fitting (16) is fitted onto the upstream free end (12b) of the body (12) after the sectioning step.

5. Production process according to any one of the preceding claims, **characterized in that** it includes a step consisting in introducing a flexible core (72) coaxially with the extrudate (38) into the extrudate (38) during its production and before the said step of bending the extrudate (38).

6. Production process according to the preceding claim, in combination with Claim 3, **characterized in that** it includes a step of extracting the flexible core (72) from the extrudate (38) immediately before the sectioning step.

7. Production process according to any one of the preceding claims, **characterized in that** it includes step of forcibly cooling the tubular body (12) after its production by bending and before the sectioning step.

8. Production process according to the preceding claim, **characterized in that** the cooling step consists in making a heat-transfer fluid circulate within the flexible core (72).

9. Production process according to any one of the preceding claims, **characterized in that** the bending step consists in carrying out, in succession, several bending operations on the hot extrudate (38) in different orientations.

10. Installation (22) for producing components comprising a tubular body (12), by applying the production process according to any one of the preceding claims, of the type which includes a device (24) for producing the tubular extrudate (38) by extrusion or by injection, and a bending head (42) for bending the tubular extrudate (38), which bending head is placed immediately downstream of the production device (24),
**characterized in that** it includes a device (62) for fitting an end-fitting (14) onto the downstream free end (38a) of the extrudate (38) when the said free end (38a) of the extrudate (38) projects from the temperature regulation device (58).

11. Installation (22) according to the preceding claim, of the type which includes a device (58) for regulating the temperature of the extrudate (38) to what is called a bending temperature, **characterized in that** the temperature regulation device (58) is placed between the production device (24) and the bending head (42).

12. Installation (22) according to the preceding claim, **characterized in that** it includes a device (40) for sectioning the extrudate (38), placed downstream of the temperature regulation device (58) or downstream of the bending head (42).

13. Installation (22) according to the preceding claim, **characterized in that** it includes a device (74) for introducing a flexible core (72) coaxially into the extrudate (38), so that these two elements leave the head (34) of the production device (24) continuously.

14. Installation (22) according to the preceding claim, **characterized in that** the device (74) for introducing the flexible core (72) comprises a feed device for feeding the core into the head (34) of the production device (24).

15. Installation (22) according to the preceding claim, **characterized in that** the feed device (74) comprises a mechanism for driving the flexible core (72) so that the speed of advance of the flexible core (72) and the speed of the extrudate (38) output by the production device (24) are substantially equal.

16. Installation (22) according to the preceding claim, in combination with Claim 3, **characterized in that** the drive mechanism (74) is capable of retracting the flexible core (72), in order to extract it from the bent extrudate (38), immediately before the sectioning step.

17. Installation (22) according to the preceding claim, **characterized in that** the flexible core (72) is tubular and a heat-transfer fluid can be made to pass through it.

18. Installation (22) according to the preceding claim, **characterized in that** the flexible core (72) is made of polytetrafluoroethylene or a silicone.
